# EUROPÄISCHE PATENTANMELDUNG

(11) **EP 4 687 221 A1**
(43) Veröffentlichungstag der Anmeldung: **04.02.2026**
(21) Anmeldenummer: 24191800.2
(22) Anmeldetag: 30.07.2024
(51) Int. Cl.: H01R 4/48, H01R 4/64, H02G 13/00

(54) **BLITZSCHUTZLEITERKLEMME**

(71) Anmelder: DEHN SE, 92318 Neumarkt i.d. OPf. (DE)
(72) Erfinder: Reichl, Sebastian, 92318 Neumarkt i.d.OPf. (DE); Simbeck, Maximilian, 92318 Neumarkt i.d.OPf. (DE)
(74) Vertreter: Prinz & Partner mbB

(57) **Zusammenfassung**

Es ist eine Blitzschutzleiterklemme (10) zur Fixierung von einem Blitzschutzoder Erdungsleiter (12) an einem Bewehrungsmaterial (14) gezeigt. Die Blitzschutzleiterklemme (10) umfasst zwei Klemmvorrichtungen (16), die jeweils eine Basis (18) aufweisen, über die die beiden Klemmvorrichtungen (16) in einer Verbindungsebene (E) miteinander verbunden sind. Zudem weisen die Klemmvorrichtungen (16) jeweils eine Aufnahme (20) auf, die durch einen Halteschenkel (22), einen Übergangsabschnitt und einen Federschenkel (26) gebildet ist. Dabei weisen die Aufnahmen (20) jeweils eine Aufnahmeöffnung (28) auf, die durch den jeweiligen Halteschenkel (22) und den Federschenkel (26) begrenzt ist, wobei die Aufnahmeöffnungen (28) jeweils zur Verbindungsebene (E) weisen.

Außerdem wird eine Blitzschutzleiterklemme (110) zur Befestigung von wenigstens einem Blitzschutz- oder Erdungsleiter (112) an einer Potenzialausgleichsschiene gezeigt.

## Beschreibung

Die Erfindung betrifft eine Blitzschutzleiterklemme zur Fixierung von einem Blitzschutz- oder Erdungsleiter an einem Bewehrungsmaterial. Ferner betrifft die Erfindung eine Blitzschutzleiterklemme zur Befestigung von wenigstens einem Blitzschutz- oder Erdungsleiter an einer Potenzialausgleichsschiene.

Aus dem Stand der Technik sind Blitzschutzleiterklemmen bekannt, mit denen ein Blitzschutz- oder Erdungsleiter elektrisch an Bewehrungsmaterial angebunden werden kann, um den wenigstens einen Blitzschutz- oder Erdungsleiter oder eine daran angeschlossene Komponente zu erden. Daher können solche Klemmen auch als Erdungsklemmen bezeichnet werden.

Üblicherweise bestehen die Blitzschutzleiterklemmen aus in entgegengesetzte Richtungen abstehende Federschenkel, die aus einem elektrisch leitfähigen Material gebildet sind und eine Form zum Aufnehmen und Kontaktieren eines Abschnitts des jeweiligen Blitzschutzes- oder Erdungsleiters bzw. Bewehrungsmaterials aufweisen. Die Federschenkel sind dabei über einen Verbindungsabschnitt miteinander verbunden, sodass eine Blitzschutzleiterklemme entsteht, die einen Blitzschutz- oder Erdungsleiter an einem Bewehrungsmaterial fixieren kann.

Dabei muss die Blitzschutzleiterklemme so gewählt werden, dass sie zu dem spezifischen Leiter sowie zu dem spezifischen Bewehrungsmaterial passt. Dementsprechend gibt es verschiedene Größen der Blitzschutzleiterklemmen für unterschiedliche Arten von Leiter, bspw. Rundleiter oder Flachleiter, sowie für unterschiedliche Querschnitte der Leiter bzw. des Bewehrungsmaterials.

Hinzu kommt, dass insbesondere beim Betreten von Bewehrungsmatten, der Blitzschutz- oder Erdungsleiter oder das Bewehrungsmaterial aus der Blitzschutzleiterklemme rutschen kann, da hierdurch die Federschenkel in Schwingungen geraten und auseinandergedrückt werden können. Somit ist eine sichere Verbindung zwischen dem Leitermaterial und dem Bewehrungsmaterial in einem solchen Fall nicht mehr gegeben. Um dennoch einen Blitzschutz gewährleisten zu können, müssen die Verbindungen zwischen den Blitzschutz-oder Erdungsleitern und dem Bewehrungsmaterial mehrfach überprüft werden, was die Dauer des Bauprojekts verlängert und die Kosten erhöht.

Aus dem Stand der Technik ist außerdem eine Blitzschutzleiterklemme bekannt, mit der ein oder mehrere Leiter an einer Potenzialausgleichsschiene elektrisch angebunden werden können, um den wenigstens einen Blitzschutz-oder Erdungsleiter oder eine daran angeschlossene Komponente zu erden. Auch diese Blitzschutzleiterklemmen können als Erdungsklemmen bezeichnet werden.

Eine Potenzialausgleichsschiene dient grundsätzlich dem Potenzialausgleich und ist ein Bestandteil der Elektroinstallation und des inneren Blitzschutzes eines Gebäudes. Die Potenzialausgleichsschiene legt dabei alle über sie miteinander verbundenen Komponenten sowie einen Fundamenterder beziehungsweise einen Ringerder auf ein gemeinsames Erdpotenzial.

Die Herstellung der aus dem Stand der Technik bekannten Blitzschutzleiterklemmen ist jedoch aufgrund der verwendeten Komponenten aufwendig, da zahlreiche Arbeitsschritte notwendig sind, um die zahlreichen Komponenten relativ zueinander korrekt anzuordnen, um die Blitzschutzleiterklemme herstellen zu können. Die komplette Herstellung mit den zahlreichen Arbeitsschritten hat hohe Herstellungskosten zur Folge.

Daher ist es eine Aufgabe der Erfindung, eine Blitzschutzleiterklemme zur Fixierung von verschiedenen Blitzschutz- oder Erdungsleiter an einem Bewehrungsmaterial oder einer Potenzialausgleichsschiene bereitzustellen, die einfach herzustellen und somit kostengünstig ist und eine sichere Fixierung gewährleistet.

Die Aufgabe wird erfindungsgemäß gelöst durch eine Blitzschutzleiterklemme zur Fixierung von einem Blitzschutz- oder Erdungsleiter an einem Bewehrungsmaterial. Die Blitzschutzleiterklemme umfasst zwei Klemmvorrichtungen, die jeweils eine Basis aufweisen, über die die beiden Klemmvorrichtungen in einer Verbindungsebene miteinander verbunden sind. Zudem weisen die Klemmvorrichtungen jeweils eine Aufnahme auf, die durch einen Halteschenkel, einen Übergangsabschnitt und einen Federschenkel gebildet ist. Dabei weisen die Aufnahmen jeweils eine Aufnahmeöffnung auf, die durch den jeweiligen Halteschenkel und den Federschenkel begrenzt ist, wobei die Aufnahmeöffnungen jeweils zur Verbindungsebene weisen. Die Aufnahmeöffnungen weisen also zur Verbindungsebene, in der die Rückseiten der Basen der beiden Klemmvorrichtungen aneinander anliegen, über die die Basen miteinander verbunden sind. Da die Aufnahmeöffnungen derart in Bezug auf die Basen orientiert sind, können die Blitzschutz- oder Erdungsleiter bzw. das Bewehrungsmaterial nicht unbeabsichtigt aus der Klemmvorrichtung herausrutschen, wie es im Stand der Technik der Fall ist, beispielweise für den Fall, dass Personen über das Bewehrungsmaterial laufen.

Vorzugsweise bilden die Klemmvorrichtung mit den Blitzschutz- oder Erdungsleitern bzw. dem Bewehrungsmaterial eine formschlüssige Verbindung, sodass durch den Formschluss zusätzlich ein Herausrutschen verhindert wird, insbesondere ein Herausrutschen des Blitzschutz- oder Erdungsleiters oder einer anderen Komponente, die mit der Klemmvorrichtung klemmend gehalten ist.

Bei den Blitzschutz- oder Erdungsleitern kann es sich sowohl um Rundleiter als auch um Flachleiter handeln, die mit dem Bewehrungsmaterial verbunden werden sollen. Dabei kann mit der Blitzschutzleiterklemme sowohl eine Verbindung von zwei Rundleitern, eine Verbindung zwischen zwei Flachleitern sowie eine Verbindung von einem Rundleiter und einem Flachleiter realisiert werden. Somit ist die Blitzschutzleiterklemme flexibel und vielseitig einsetzbar.

Es ist auch denkbar, dass mehr als ein Rundleiter von einer Klemmvorrichtung gehalten wird, sodass auch mehr als zwei Rundleiter durch die Blitzschutzleiterklemme miteinander verbunden werden können.

Grundsätzlich werden nachfolgend Rundleiter und Flachleiter unter dem Begriff Leiter zusammengefasst.

Die Blitzschutzleiterklemme ist auch geeignet, einen Blitzschutz- oder Erdungsleiter an einem Blitzschutz- oder Erdungsleiter zu fixieren bzw. ein Bewehrungsmaterial an einem Bewehrungsmaterial zu fixieren. Insofern handelt es sich bei der Blitzschutzleiterklemme auch um eine Blitzschutzleiterklemme zur Fixierung von einem Blitzschutz- oder Erdungsleiter an einem Blitzschutz- oder Erdungsleiter bzw. um eine Blitzschutzleiterklemme zur Fixierung von einem Bewehrungsmaterial an einem Bewehrungsmaterial.

Grundsätzlich kann das Bewehrungsmaterial als Blitzschutz- oder Erdungsleiter fungieren, insbesondere dann, wenn Bewehrungsmaterial an Bewehrungsmaterial fixiert wird.

Bei den Blitzschutz- und Bewehrungsleitern sowie dem Bewehrungsmaterial handelt es sich vorzugsweise um übliche Leitungsmaterialen im Blitzschutzbereich. Mit anderen Worten ist der Blitzschutz- oder Erdungsleiter sowie das Bewehrungsmaterial aus einem Material ausgebildet, das für die Verwendung im Blitzschutz geeignet ist.

Zudem kann die Aufnahme der Klemmvorrichtung, welche durch den Halteschenkel und den Federschenkel sowie den Übergangsabschnitt definiert wird, Blitzschutz- oder Erdungsleitern bzw. Bewehrungsmaterial verschiedenster Größen aufnehmen und klemmend fixieren. Dabei ist die Blitzschutzleiterklemme in einer bevorzugten Ausführungsform insbesondere dafür ausgelegt, Flachleiter von bis zu 30 mm x 3,5 mm und Rundleiter mit einem Durchmesser zwischen 6 und 12 mm zu fixieren.

Die Blitzschutzleiterklemme ist also vielseitig und flexibel einsetzbar, sodass für eine Vielzahl an möglichen Anwendungen lediglich eine einzige Art von Blitzschutzleiterklemme benötigt wird.

Bei den Blitzschutz- oder Erdungsleiter handelt es sich insbesondere um Leiter ohne Abschirmung. Das heißt, die Blitzschutz- oder Erdungsleiter sind nicht von einer metallischen Folie oder einem Geflecht bedeckt.

Wenn der Blitzschutz- oder Erdungsleiter als Flachleiter ausgebildet ist, wird der Flachleiter durch das Ende des Federschenkels gegen den Halteschenkel gedrückt, sodass der Federschenkel an seinem zur Basis weisenden Ende einen sogenannten Niederhaltabschnitt hat.

Um einen Blitzschutz- oder Erdungsleiter bzw. Bewehrungsmaterial mit der Blitzschutzleiterklemme zu fixieren, wird zunächst der entsprechende Leiter bzw. das Bewehrungsmaterial über die Aufnahmeöffnung in die Aufnahme eingeschoben. Dabei wird durch den Leiter bzw. das Bewehrungsmaterial ein Druck auf den Federschenkel ausgeübt, sodass dieser federnd bewegt wird. Wenn der Leiter bzw. das Bewehrungsmaterial in der Aufnahme eingeführt ist, wird der Federschenkel durch die Federvorspannkraft in Richtung seiner Ausgangsposition zurückbewegt, sodass der Leiter bzw. das Bewehrungsmaterial effektiv in der Aufnahme geklemmt wird. Die Federvorspannkraft kann dabei durch das Material des Federschenkels und/oder des Übergangsabschnitts gewährleistet werden.

Die jeweilige Klemmvorrichtung besteht insbesondere zumindest aus der Basis, von der ausgehend sich der Halteschenkel in eine Richtung erstreckt, die von der anderen Klemmvorrichtung der Blitzschutzleiterklemme wegweist. Der Halteschenkel geht über den Übergangsabschnitt in den Federschenkel über, der ein freies Ende der Klemmvorrichtung aufweist und sich in Richtung der Basis bzw. in Richtung der anderen Klemmvorrichtung der Blitzschutzleiterklemme erstreckt. Der Halteschenkel, der Übergangsabschnitt und der Federschenkel bilden zusammen eine (im Wesentlichen) U-Form auf, wobei die Öffnung der U-Form der Aufnahmeöffnung der Aufnahme entspricht.

Der Federschenkel ist dabei (reversibel) federnd ausgebildet, was unter anderem daran liegt, dass der Federschenkel das freie Ende aufweist. Zudem ist und aus einem reversibel aus einem federnden Material ausgebildet, sodass der Übergangsabschnitt biegbar ist, was zur federnden Klemmung über den Federschenkel führt.

Gemäß einer Ausführungsform sind die beiden Klemmvorrichtungen zwei separate Bauteile, die jeweils baugleich ausgebildet sind. Dabei sind die beiden Klemmvorrichtungen so miteinander verbunden, dass die Blitzschutzleiterklemme symmetrisch ausgebildet ist. Dementsprechend muss zum Herstellen der Blitzschutzleiterklemme lediglich ein Bauteil, die Klemmvorrichtung, gefertigt werden, aus dem die Blitzschutzleiterklemme zusammengesetzt werden kann. Somit können die Klemmvorrichtungen und dementsprechend auch die Blitzschutzleiterklemme schnell und einfach produziert werden, sodass die Produktionskosten gering gehalten werden.

Gemäß einem Aspekt sind die wenigstens zwei Klemmvorrichtungen jeweils einstückig aus einem Federblech ausgebildet. Dabei ist das Federblech vorzugsweise elektrisch leitfähig. Die Klemmvorrichtungen werden insbesondere aus dem Federblech ausgestanzt und anschließend geformt, beispielsweise in die Form gebogen bzw. durch ein anderes Formgebungsverfahren in die gewünschte Form gebracht, sodass auch hierdurch die Produktionskosten möglichst geringgehalten werden können. Mit anderen Worten sind die Basis, der Halteschenkel, der Übergangsabschnitt und der Federschenkel gemeinsam einstückig ausgebildet bzw. aus einem Federblech hergestellt und entsprechend geformt worden.

Vorzugsweise können der Halteschenkel und der Federschenkel jeweils geradlinig ausgebildet sein, wohingegen der Übergangsabschnitt gekrümmt ausgebildet ist, insbesondere C- oder U-förmig. Hierdurch ergibt sich grundsätzlich die (im Wesentlichen) U-Form des Bereichs der Klemmvorrichtung, der den Halteschenkel, den Übergangsabschnitt und den Federschenkel umfasst.

Insbesondere beschreibt die Blitzschutzleiterklemme somit eine S-Form bzw. eine spiegelverkehrte S-Form, da hierdurch ein gleichzeitiges Öffnen der beiden Klemmvorrichtungen verhindert werden kann. Aufgrund der Geometrie der Blitzschutzleiterklemme ist es ohnehin unwahrscheinlicher, dass sich ein Blitzschutz- oder Erdungsleiter bzw. das Bewehrungsmaterial ungewollt aus der Blitzschutzleiterklemme löst. Sollte dieser Fall dennoch auftreten, so werden auch bei einer Belastung der Blitzschutzleiterklemme nicht beide Klemmvorrichtungen gleichzeitig geöffnet, sodass die Blitzschutzleiterklemme nicht abfallen kann.

Die Symmetrie der Blitzschutzleiterklemme ergibt sich dabei aus der Spiegelsymmetrie in Bezug auf die Verbindungsebene und der Rotationssymmetrie um eine zur Verbindungsebene senkrechte Achse, die durch einen Mittelpunkt der Basen verläuft.

Gemäß einer weiteren Ausführungsform weisen bzw. weist der erste Halteschenkel und/oder der Federschenkel wenigstens einen Sicherungsvorsprung auf, der in Richtung der Aufnahme weist. Dabei ist der Sicherungsvorsprung insbesondere durch Ausstanzen aus dem Halteschenkel und/oder dem Federschenkel gebildet. Der Sicherungsvorsprung bietet somit eine zusätzliche Sicherung vor dem Verrutschen/Rausrutschen des Blitzschutz-oder Erdungsleiters bzw. des Bewehrungsmaterials, insbesondere wenn es sich bei dem Blitzschutz- oder Erdungsleiter um einen Rundleiter handelt.

Gemäß einer Ausführungsform sind die beiden Klemmvorrichtungen mittels eines Drehgelenks miteinander verbunden, sodass die beiden Klemmvorrichtungen zueinander verdrehbar sind. Dabei sind die beiden Klemmvorrichtungen vorzugsweise um 360° zueinander verdrehbar, also vollständig. Durch die Verbindung der Klemmvorrichtung über ein Drehgelenk erhöht sich die Flexibilität weiter, da die Blitzschutzleiterklemme sowohl für eine parallele als auch eine senkrechte, auch als Kreuzverbindung bezeichnete, Fixierung verwendet werden kann, insbesondere auch für verschiedene Ausrichtungen der zu verbindenden Komponenten. Dementsprechend erhöht sich die Anzahl der möglichen Verwendungen der Blitzschutzleiterklemme und es ist nicht notwendig mehrere verschiedene Blitzschutzleiterklemmen vorrätig zu haben.

Ein weiterer Aspekt sieht vor, dass der Halteschenkel und/oder der Federschenkel wenigstens zwei Ausbuchtungen aufweisen bzw. aufweist. Bei den Ausbuchtungen handelt es sich insbesondere um bogenförmige Ausbuchtungen. Dabei ist die Größe von benachbarten Ausbuchtungen unterschiedlich. Hierdurch lassen sich Rundleiter bzw. Bewehrungsmaterial mit unterschiedlichem Durchmesser besonders effektiv klemmend fixieren, da für die unterschiedlichen Durchmesser speziell zugeordnete Ausbuchtungen vorgesehen sein können.

Die Größe, insbesondere der Durchmesser, der Ausbuchtungen im Halteschenkel und/oder Federschenkel kann dabei also verschiedenen Leiter- und/oder Bewehrungsmaterialquerschnitten entsprechen, sodass die Blitzschutz-oder Erdungsleiter sowie das Bewehrungsmaterial in einer Ausbuchtung mit der entsprechenden Größe gehalten werden können. Dadurch erhöht sich die Sicherheit der Fixierung durch die Blitzschutzleiterklemme.

Während die Ausbuchtungen insbesondere zur sicheren Fixierung von Rundleitern bzw. Bewehrungsmaterial geeignet sind, können auch mit dieser Ausführungsform der Klemmvorrichtungen Flachleiter fixiert werden.

Wenn sowohl der Halteschenkel als auch der Federschenkel Ausbuchtungen aufweisen, ist die Anzahl der Ausbuchtungen im Federschenkel und im Halteschenkel vorzugsweise gleich. Dementsprechend können sich Ausbuchtungen mit der gleichen Größe gegenüberliegen, sodass eine (fast geschlossene) kreisförmige Aufnahme für die Blitzschutz- oder Erdungsleiter bzw. das Bewehrungsmaterial entsteht.

Ähnlich wie beim Einstecken der Blitzschutz- oder Erdungsleiter bzw. des Bewehrungsmaterials in die Ausführungsform der Blitzschutzleiterklemme ohne Ausbuchtungen, verdrängt der Blitzschutz- oder Erdungsleiter bzw. das Bewehrungsmaterial den Federschenkel der Klemmvorrichtung, wodurch der Federschenkel bewegt wird. Wenn der Blitzschutz- oder Erdungsleiter bzw. das Bewehrungsmaterial die Ausbuchtung mit der entsprechenden Größe erreicht hat, so wird der Federschenkel durch die Federvorspannkraft in Richtung seiner Ausgangsposition zurückbewegt.

Gemäß einer bevorzugten Ausführungsform weisen der Halteschenkel und/oder der Federschenkel drei Ausbuchtungen mit unterschiedlichen Größen auf, wobei die Ausbuchtungen entsprechend ihrer Größe angeordnet sind. Anders ausgedrückt, die Ausbuchtungen sind vorzugsweise von klein nach groß oder alternativ von groß nach klein angeordnet.

Vorzugweise ist die größte Ausbuchtung dem Übergangsabschnitt zugeordnet, wohingegen die kleinste Ausbuchtung der Aufnahmeöffnung zugeordnet ist.

Ein bevorzugter Aspekt sieht vor, dass der Halteschenkel und der Federschenkel jeweils wenigstens zwei Ausbuchtungen aufweisen, wobei die Größe der Ausbuchtungen des Halteschenkels der Größe der Ausbuchtungen des Federschenkels entsprechen, wobei sich die Ausbuchtungen mit derselben Größe einander gegenüberliegen. Dementsprechend werden durch die einander gegenüberliegenden Ausbuchtungen Halteabschnitte für unterschiedliche Querschnitte der zu fixierenden Komponente definiert, sodass die Blitzschutzleiterklemme eine größere Spanne von Querschnitten der Blitzschutz-oder Erdungsleiter bzw. des Bewehrungsmaterials sicher fixieren kann.

Vorzugsweise sind dementsprechend der Halteschenkel und der Federschenkel gleich lang, sodass die Ausbuchtungen möglichst viele Halteabschnitte definieren können.

Ein Aspekt sieht vor, dass die Klemmvorrichtung einen Einschubhilfeabschnitt aufweist, der sich zwischen der Basis und dem Halteschenkel erstreckt. Der Einschubhilfeabschnitt ist dabei insbesondere um einen Winkel zwischen 10° und 80° zur Basis geneigt. Der Einschubhilfeabschnitt erleichtert das Einführen des Blitzschutz- oder Erdungsleiters bzw. des Bewehrungsmaterials. Insbesondere wenn es sich bei dem Blitzschutz- oder Erdungsleiter um einen Flachleiter handelt, wird das Einführen des Blitzschutz- oder Erdungsleiters durch den Einschubhilfeabschnitt erleichtert, da der Flachleiter über den Einschubhilfeabschnitt beim Einschieben in die Aufnahme entsprechend geführt wird.

Zudem kann vorgesehen sein, dass der Federschenkel wenigstens halb so lang wie der Halteschenkel ist, insbesondere wobei die Länge des Federschenkels wenigstens zwei Dritteln der Länge des Halteschenkels entspricht. Durch einen langen Federschenkel wird der Platz zwischen dem Ende des Federschenkels und der Basis verringert, sodass der Blitzschutz- oder Erdungsleiter bzw. das Bewehrungsmaterial nicht ungewollt aus der Klemmvorrichtung rutschen kann, sodass eine sichere Verbindung zwischen dem Blitzschutz- oder Erdungsleiter und der dem Bewehrungsmaterial gewährleistet werden kann.

Der Federschenkel ist jedoch kürzer als der Halteschenkel, sofern kein Einschubhilfeabschnitt vorhanden ist, da sonst das Einführen des Blitzschutz-oder Erdungsleiters bzw. des Bewehrungsmaterials deutlich erschwert wäre. Sofern ein Einschubhilfeabschnitt vorhanden ist, können der Federschenkel und der Halteschenkel gleich lang ausgebildet sein.

Ferner wird die Aufgabe erfindungsgemäß gelöst durch eine Blitzschutzleiterklemme zur Befestigung von wenigstens einem Blitzschutz- oder Erdungsleiter an einer Potenzialausgleichsschiene. Dabei umfasst die Blitzschutzleiterklemme einen Anlageschenkel zur Anlage an der Potenzialausgleichsschiene und einen dem Anlageschenkel gegenüberliegenden Federschenkel. Der Anlageschenkel und der Federschenkel sind dabei über einen Übergangsabschnitt miteinander verbunden, der eine erste Aufnahme für einen Rundleiter ausbildet. Zudem wird eine zweite Aufnahme für einen Flachleiter durch den Anlageschenkel und den Federschenkel ausgebildet. Die Blitzschutzleiterklemme weist also eine erste Aufnahme für einen Rundleiter und eine zweite Aufnahme für einen Flachleiter auf, in dem eine Ausbuchtung im Übergangsabschnitt zwischen dem Anlageschenkel und dem Federschenkel vorgesehen ist. Somit kann durch die Blitzschutzleiterklemme mehr als ein Blitzschutz- bzw. Erdungsleiter an der Potenzialausgleichsschiene befestigt werden, insbesondere ein Flachleiter und ein Rundleiter gleichzeitig, also zwei Blitzschutz- bzw. Erdungsleiter unterschiedlicher Art.

Somit kann auch diese Ausführungsform der Blitzschutzleiterklemme vielseitig eingesetzt werden, da sowohl Rund- als auch Flachleiter einzeln oder gleichzeitig an der Potentialausgleichsschiene befestigt werden können.

Bei dem Übergangsabschnitt kann es sich um einen geformten, insbesondere gebogenen, Abschnitt handeln, der die erste Aufnahme ausbildet.

Vorzugsweise ist die Potenzialausgleichsschiene als Flachleiter ausgebildet, sodass der Anlageschenkel flächig auf der Potenzialausgleichsschiene aufliegen kann und somit die bestmöglichste elektrische Anbindung hat.

Zudem kann der Federschenkel einen Niederhaltabschnitt aufweisen, der an einer vom Übergangsabschnitt abgewandten Seite des Federschenkels vorgesehen ist. Dabei ist der Niederhaltabschnitt in Richtung des Anlageschenkels vorgespannt. Durch den Niederhaltabschnitt kann ein Flachleiter gegen den Übergangsabschnitt gedrückt und fixiert werden.

Vorzugsweise weist der Federschenkel einen Sicherungsvorsprung auf. Der Sicherungsvorsprung wird dabei insbesondere ausgebildet, indem der Federschenkel gestanzt wird. Der Sicherungsvorsprung stellt eine zusätzliche Sicherung dar, um einen Rausrutschen des Blitzschutz- bzw. Erdungsleiters zu verhindern.

Alternativ und/oder zusätzlich ist es auch möglich, dass der Anlageschenkel einen Sicherungsvorsprung aufweist.

Vorzugsweise erstreckt sich der Sicherungsvorsprung in Richtung des Übergangsabschnitts bzw. des Anlageabschnitts.

Gemäß einer Ausführungsform ist in dem Anlageschenkel und in dem Federschenkel jeweils eine Befestigungsöffnung vorgesehen, wobei die beiden Befestigungsöffnungen miteinander fluchten und eingerichtet sind, ein Befestigungsmittel aufzunehmen, womit die Blitzschutzleiterklemme an der Potenzialausgleichsschiene befestigbar ist. Vorzugsweise wird die Blitzschutzleiterklemme dabei mittels einer Schraube an der Potenzialausgleichsschiene befestigt.

Dabei kann die Blitzschutzleiterklemme drehbar gelagert sein, sodass die Blitzschutzleiterklemme in Bezug zur Potenzialausgleichsschiene insbesondere um 360° verdrehbar ist.

Alternativ kann die Blitzschutzleiterklemme aber auch an die Potenzialausgleichsschiene genietet oder anderweitig befestigt werden. Durch die Befestigungsöffnung des Federschenkels kann sich dann ein Fixiermittel erstrecken, um den Flachleiter mit der Blitzschutzleiterklemme zusätzlich zu fixieren.

Ein weiterer Aspekt sieht vor, dass der Übergangsabschnitt im Querschnitt teilkreisförmig ausgebildet ist. Dabei ist der Übergangsabschnitt im Querschnitt länger als ein Halbkreis ausgebildet, sodass der Rundleiter bestmöglich gesichert werden kann. Hierdurch ist also sichergestellt, dass der Rundleiter nicht versehentlich aus der ersten Aufnahme herausrutschen kann.

Vorzugsweise kann dabei der Querschnitt des Übergangsabschnitts tendenziell kleiner als der Querschnitt des zu befestigenden Rundleiters sein, da die Blitzschutzleiterklemme aus einem Federblech gefertigt ist und sich somit für einen etwas größeren Leiterquerschnitt aufbiegen lässt.

Prinzipiell liegt der Vorteil der Blitzschutzleiterklemme darin, dass die Blitzschutzleiterklemme vielseitig und flexibel anwendbar ist, sodass sowohl verschiedene Leitergrößen als auch Rundleiter sowie Flachleiter fixiert werden können.

Weitere Vorteile und Eigenschaften der Erfindung ergeben sich aus der nachfolgenden Beschreibung und den Zeichnungen, auf die nachfolgend Bezug genommen wird. In den Zeichnungen zeigen:
- Figur 1A eine Seitenansicht einer erfindungsgemäßen Blitzschutzleiterklemme gemäß einer ersten Ausführungsform und Figur 1B eine perspektivische Ansicht der in Figur 1A gezeigten Blitzschutzleiterklemme;
- Figur 2A eine Seitenansicht der erfindungsgemäßen Blitzschutzleiterklemme gemäß einer zweiten Ausführungsform und Figur 2B die entsprechende perspektivische Ansicht;
- Figur 3A eine Seitenansicht der erfindungsgemäßen Blitzschutzleiterklemme gemäß einer dritten Ausführungsform und Figuren 3B und 3C perspektivische Ansichten der Blitzschutzleiterklemme in zwei unterschiedlichen Ausrichtungen;
- Figur 4 eine perspektivische Ansicht der erfindungsgemäßen Blitzschutzleiterklemme gemäß einer vierten Ausführungsform;
- Figur 5 eine perspektivische Ansicht der erfindungsgemäßen Blitzschutzleiterklemme gemäß einer fünften Ausführungsform;
- Figur 6 eine Seitenansicht der erfindungsgemäßen Blitzschutzleiterklemme gemäß einer sechsten Ausführungsform;
- Figur 7 eine perspektivische Ansicht der erfindungsgemäßen Blitzschutzleiterklemme gemäß einer siebten Ausführungsform;
- Figuren 8A bis 8F Seitenansichten der in Figur 3 gezeigten Blitzschutzleiterklemme, wobei die Fixierung von zwei Rundleitern mit gleichem Querschnitt in den Figuren 8A und 8B, von zwei Rundleitern mit unterschiedlichem Querschnitt in Figur 8C, von einem Rundleiter und einem Flachleiter in den Figuren 8D und 8E und von zwei Flachleitern in Figur 8F gezeigt ist;
- Figur 9 eine perspektivische Ansicht der Blitzschutzleiterklemme gemäß einer achten Ausführungsform mit einem Flachleiter, einer Potenzialausgleichsschiene und einem Rundleiter; und
- Figur 10 eine perspektivische Ansicht der Blitzschutzleiterklemme aus Figur 9.

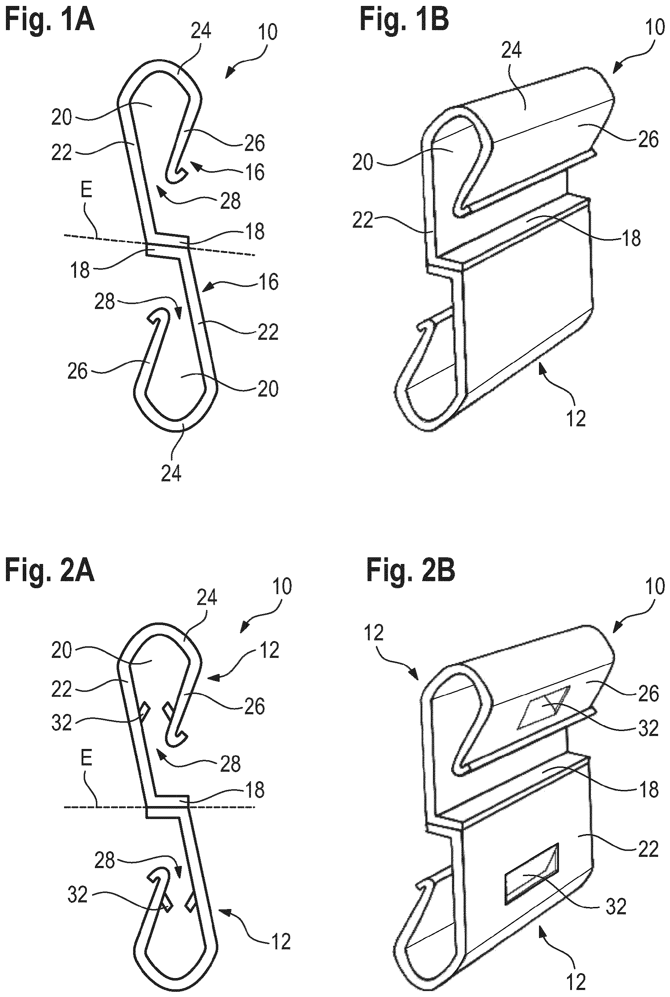

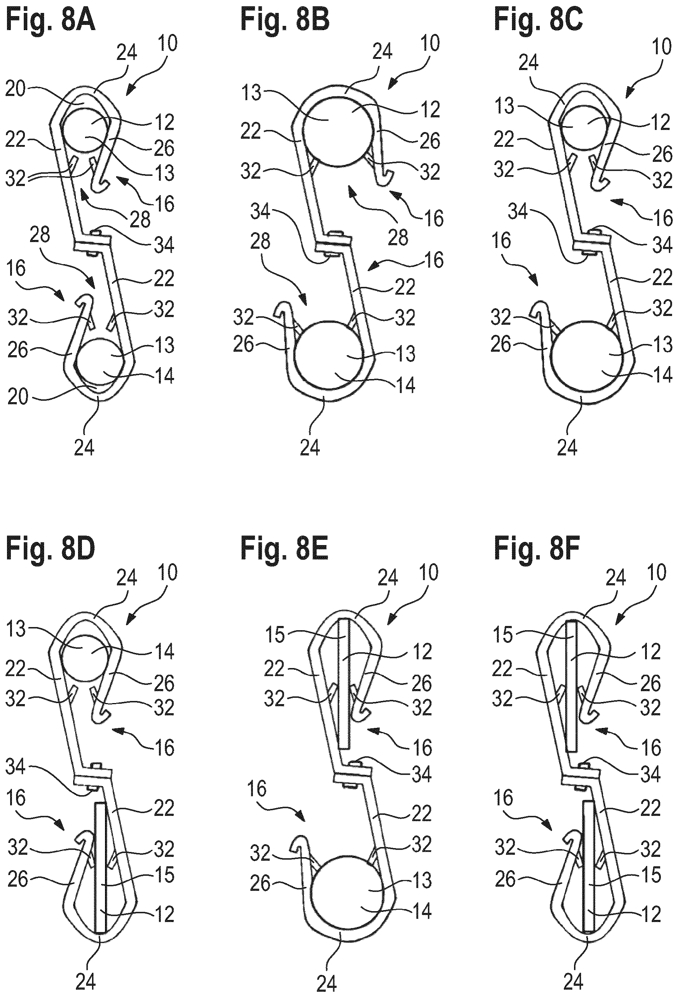

In den Figuren 1A und 1B ist eine erste Ausführungsform einer Blitzschutzleiterklemme 10 gezeigt, die einen Blitzschutz- oder Erdungsleiter 12 an einem Bewehrungsmaterial 14 oder Blitzschutz- bzw. Erdungsleiter 12 untereinander oder Bewehrungsmaterial 14 untereinander fixieren kann, was in den Figuren 1A und 1B nicht gezeigt ist, aber in den Figuren 8A bis 8F.

Die Blitzschutzleiterklemme 10 umfasst dabei zwei Klemmvorrichtungen 16, welche als separate Bauteile ausgeführt sind, die baugleich und miteinander verbunden sind.

Jede der Klemmvorrichtungen 16 weist eine Basis 18 auf, wobei die Basen 18 der Klemmvorrichtungen 16 aneinander anliegen, nämlich über ihre jeweiligen Rückseiten, an denen die Klemmvorrichtungen 16 auch miteinander verbunden sind. Insofern sind die beiden Klemmvorrichtungen 16 über die Basen 18 in einer Verbindungsebene E miteinander verbunden.

Neben der Basis 18 weist jede der Klemmvorrichtungen 16 eine Aufnahme 20 auf, die durch einen Halteschenkel 22, einen Übergangsabschnitt 24 und einen Federschenkel 26 gebildet wird, die jeweils ineinander übergehen. Der Halteschenkel 22 erstreckt sich dabei ausgehend von der Basis 18 in eine Richtung, die von der anderen Klemmvorrichtung 16 wegweist.

Zum Einführen des Blitzschutz- oder Erdungsleiters 12 bzw. des Bewehrungsmaterials 14 weisen die Aufnahmen 20 jeweils eine Aufnahmeöffnung 28 auf, die durch den entsprechenden Halteschenkel 22 und den Federschenkel 26 seitlich begrenzt wird.

Wie insbesondere in der Seitenansicht in Figur 1A gut zu erkennen ist, weist die Aufnahmeöffnung 28 somit in Richtung der Basis 18 bzw. der Verbindungsebene E.

Die Blitzschutzleiterklemme 10 ist insbesondere eingerichtet, einen Blitzschutz- oder Erdungsleiter 12 ohne Abschirmung an einem Bewehrungsmaterial 14 zu fixieren. Das heißt, der Blitzschutz- oder Erdungsleiter 12 weist keine metallische Ummantelung oder ein metallisches Geflecht auf.

Jede der Klemmvorrichtungen 16 ist vorzugsweise aus einem elektrisch leitfähigen Federblech gefertigt, um eine elektrische Anbindung für die Erdung zu gewährleisten.

Die Klemmvorrichtung 16 der Blitzschutzleiterklemme 10 ist dafür ausgelegt, sowohl Rundleiter 13 als auch Flachleiter 15 aufzunehmen, wie aus den Figuren 8A bis 8F hervorgeht, worauf später noch Bezug genommen wird. Das Bewehrungsmaterial 14 weist üblicherweise einen etwa runden Querschnitt auf, während der Blitzschutz- oder Erdungsleiter 12 sowohl als Rundleiter 13 als auch als Flachleiter 15 ausgebildet sein kann. Daher kann das Bewehrungsmaterial 14 auch als Rundleiter angesehen werden.

Insbesondere können die Klemmvorrichtungen 16 einen Flachleiter 15 mit Maßen von bis zu 30 mm x 3,5 mm und einen Rundleiter mit einem Durchmesser zwischen 6 und 12 mm aufnehmen.

Zudem kann die Blitzschutzleiterklemme 10 sowohl zwei Rundleitern als auch zwei Flachleitern oder einen Rundleiter und einen Flachleiter aneinander fixieren, wie in den Figuren 8A bis 8F zu sehen ist.

Wie bereits erwähnt, handelt es sich bei den Klemmvorrichtungen 16 um separat ausgebildete Bauteile, die jedoch baugleich sind. Dabei sind die Klemmvorrichtungen 16 so miteinander verbunden, dass die Blitzschutzleiterklemme 10 symmetrisch ausgebildet ist.

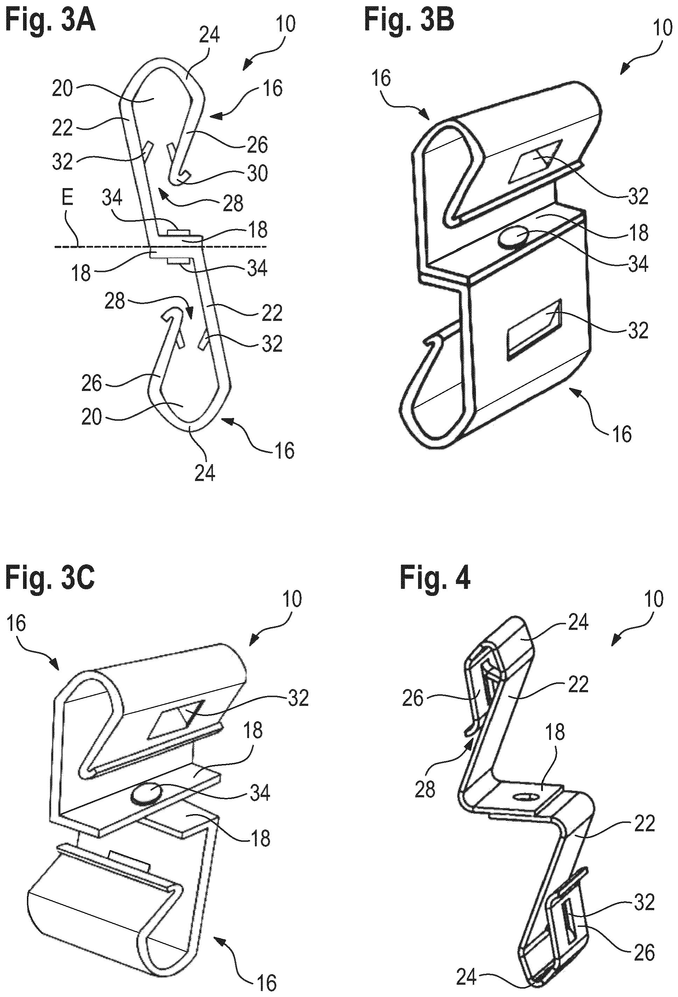

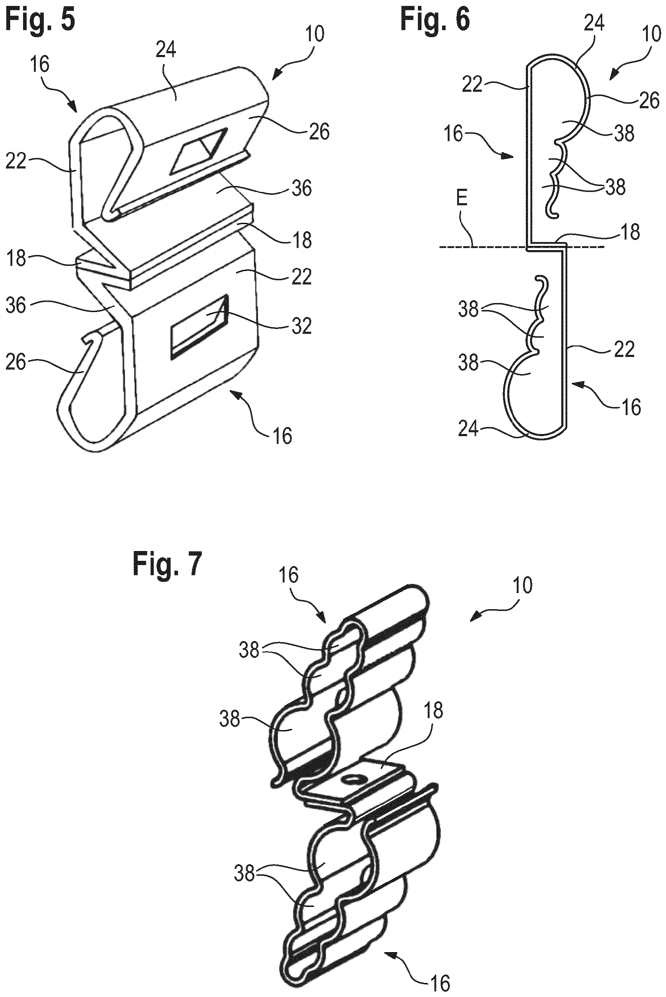

Wie insbesondere in Figur 1A zu sehen ist, beschreibt die Blitzschutzleiterklemme 10 eine S-Form. Alternativ kann die Blitzschutzleiterklemme 10 auch eine spiegelverkehrte S-Form beschreiben, wie in Figuren 4 und 6 zu sehen ist.

Die Symmetrie der Blitzschutzleiterklemme 10 ergibt sich aus der Spiegelsymmetrie in Bezug auf die Verbindungsebene E sowie die Rotationssymmetrie um eine zur Verbindungsebene E senkrechte Achse, die durch einen jeweiligen Mittelpunkt der Basen 18 verläuft.

Dabei sind der Halteschenkel 22 und der Federschenkel 26 vorzugsweise geradlinig ausgebildet, während der Übergangsabschnitt 24 gekrümmt ist. Vorzugsweise beschreibt der Übergangsabschnitt 24 dabei eine C- oder U-Form. Demnach weist der Bereich der Klemmvorrichtung 16, der den Halteschenkel 22, den Übergangsabschnitt 24 und den Federschenkel 26 umfasst, ebenfalls eine (im Wesentlichen) U-Form in einer Seitenansicht auf, wie aus Figur 1A hervorgeht.

Insbesondere wenn der Blitzschutz- oder Erdungsleiter 12 bzw. das Bewehrungsmaterial 14 als Rundleiter ausgeführt ist, kann somit der Übergangsabschnitt 24 eine an den Rundleiter angepasste Aufnahme 20 dienen.

Die zwei Klemmvorrichtungen 16 sind jeweils einstückig aus einem Federblech ausgebildet.

Vorzugsweise wird dabei die Klemmvorrichtung 16 aus dem Federblech ausgestanzt und anschließend in die gewünschte Form gebracht, also entsprechend geformt. Dies kann insbesondere durch Biegen, alternativ aber auch durch andere Formgebungsverfahren erfolgen.

Somit ist eine einfache, schnelle und günstige Produktion gewährleistet, mit der die Blitzschutzleiterklemme 10 hergestellt werden kann, die eine Vielzahl an verschiedenen Blitzschutz- oder Erdungsleitern 12 an Bewehrungsmaterial 14 befestigen kann.

Insbesondere durch die Geometrie der Blitzschutzleiterklemme 10 kann dabei gewährleistet werden, dass die Blitzschutzleiterklemme 10 sich bei Belastung nicht löst. Da die Aufnahmeöffnungen 28 der beiden Klemmvorrichtungen 16 sich auf unterschiedlichen Seiten in Bezug auf die Verbindungsebene E befinden, kann ein komplettes Abfallen der Blitzschutzleiterklemme 10 verhindert werden. Selbst wenn durch Betreten einer Bewehrungsmatte die durch das Gewicht resultierende Kraft auf die Blitzschutzleiterklemme 10 ausgeübt wird, so rutscht maximal eine Komponente aus der jeweiligen Klemmvorrichtung 16, sodass ein Abfallen der gesamten Blitzschutzleiterklemme 10 verhindert werden kann.

Zusätzlich ist der Federschenkel 26 wenigstens halb so lang wie der Halteschenkel 22, wobei die Länge des Federschenkels 26 insbesondere wenigstens zwei Dritteln der Länge des Halteschenkels 22 entspricht.

Durch einen vergleichsweise langen Federschenkel 26 wird der Abstand zwischen dem Ende 30 des Federschenkels 26 und der Basis 18 minimiert, sodass es für den Blitzschutz- oder Erdungsleiter 12 bzw. das Bewehrungsmaterial 14 schwerer ist, aus der Klemmvorrichtung 16 unbeabsichtigt zu rutschen.

Insbesondere wenn mit der Blitzschutzleiterklemme 10 ein Flachleiter 15 fixiert wird, fungiert das Ende 30 des Federschenkels 26 auch als Niederhaltabschnitt, da es den Flachleiter 15 in Richtung des Halteschenkels 22 drückt und somit den Flachleiter 15 niederhält, wie dies in den Figuren 8D und 8F beispielsweise gezeigt ist.

Gemäß einer zweiten Ausführungsform, die in den Figuren 2A und 2B gezeigt ist, weisen der Halteschenkel 22 und der Federschenkel 26 jeweils einen Sicherungsvorsprung 32 auf.

Wie insbesondere in Figur 2A gut zu sehen ist, erstreckt sich der Sicherungsvorsprung 32 in die Aufnahme 20, vorzugsweise in von der Basis 18 wegweisenden Richtung, sodass der Sicherungsvorsprung 32 als eine Auszugssicherung fungiert, da der Sicherungsvorsprung 32 einem Widerhaken entspricht.

Da die beiden Klemmvorrichtungen 16, wie vorhergehend erläutert, einstückig aus einem Federblech gefertigt werden, kann der Sicherungsvorsprung 32 in einfacher Weise aus dem Halteschenkel 22 bzw. dem Federschenkel 26 ausgestanzt worden sein. Das Federblech wird also teilweise gestanzt, um den Sicherungsvorsprung 32 auszubilden, wie aus Figur 2B deutlich wird.

Der Sicherungsvorsprung 32 bietet eine zusätzliche Sicherheit, in Bezug auf das Festklemmen des Blitzschutz- oder Erdungsleiters 12 bzw. des Bewehrungsmaterials 14. Insbesondere bei Rundleitern dient der Sicherungsvorsprung 32 dazu, ein Rausrutschen des Leiters bzw. des Bewehrungsmaterials 14 zu verhindern. Bei Flachleitern hingegen dient der Sicherungsvorsprung 32 zur Stabilisierung, sodass die Flachleiter innerhalb der Aufnahme 20 weniger Spielraum haben, wie aus den Figuren 8D bis 8F deutlich wird.

Wie beispielsweise in Figur 4 zu sehen ist, kann auch lediglich ein Sicherungsvorsprung 32 pro Klemmvorrichtung 16, beispielsweise im Federschenkel 26, vorgesehen sein.

Alternativ kann auch lediglich ein Sicherungsvorsprung 32 im Halteschenkel 22 vorgesehen sein.

Wie bereits in Bezug auf Figur 1 erläutert wurde, sind die beiden Klemmvorrichtungen 16 über ihre Basen 18 in der Verbindungsebene E miteinander verbunden.

Wie in Figuren 3A bis 3C zu sehen ist, sind die Klemmvorrichtungen 16 vorzugsweise mittels eines Drehgelenks 34 miteinander verbunden, sodass die beiden Klemmvorrichtungen 16 zueinander verdrehbar sind. Dementsprechend kann die Blitzschutzleiterklemme 10 sowohl für eine parallele Fixierung (siehe Figur 3B) als auch für eine senkrechte Fixierung (siehe Figur 3C) verwendet werden.

Alternativ zu einer parallelen oder senkrechten Fixierung, kann die Blitzschutzleiterklemme 10, aufgrund der drehbaren Verbindung der Klemmvorrichtungen 16, auch für eine windschiefe Fixierung verwendet werden.

Die durch das Drehgelenk 34 gebildete Drehachse steht dabei senkrecht zur Verbindungsebene E.

Die in Figuren 3A bis 3C gezeigte Blitzschutzleiterklemme 10 entspricht im Wesentlichen der Blitzschutzleiterklemme 10, welche in den Figuren 2A und 2B gezeigt ist. Der einzige Unterschied liegt in der Verbindung der Klemmvorrichtungen 16 über das Drehgelenk 34.

Auch die in Figur 4 gezeigte Ausführungsform unterscheidet sich von der in den Figuren 2A und 2B gezeigten Ausführungsform lediglich durch das Vorsehen eines Drehgelenks 34 sowie der spiegelverkehrten S-Symmetrie der Blitzschutzleiterklemme 10. Die Aufnahmeöffnungen 28 der Aufnahmen 20 weisen jedoch auch in der in Figur 4 gezeigten Ausführungsform zur Verbindungsebene E, wie aus Figur 4 hervorgeht.

Die in Figur 5 gezeigte Blitzschutzleiterklemme 10 entspricht im Wesentlichen der in den Figuren 3A bis 3C gezeigten Blitzschutzleiterklemme 10, wobei die in Figur 5 gezeigte Blitzschutzleiterklemme 10 zusätzlich einen Einschubhilfeabschnitt 36 aufweist.

Der Einschubhilfeabschnitt 36 ist zwischen der Basis 18 und dem Halteschenkel 22 vorgesehen, wobei der Einschubhilfeabschnitt 36 um einen Winkel zwischen 10° und 80° zur Basis 18 geneigt ist.

Insbesondere wenn der Blitzschutz- oder Erdungsleiter 12 als Flachleiter ausgeführt ist, erleichtert der Einschubhilfeabschnitt 36 das Einführen des Leiters.

Wie bereits vorhergehend erwähnt, entspricht die Länge des Federschenkels 26 vorzugsweise wenigstens zwei Dritteln der Länge des Halteschenkels 22. Während prinzipiell eine gleiche Länge von Federschenkel 26 und Halteschenkel 22 angestrebt wird, so muss der Federschenkel 26 kürzer als der Halteschenkel 22 sein, sofern kein Einschubhilfeabschnitt 36 vorhanden ist. Andernfalls wäre das Einführen der Blitzschutz- oder Erdungsleiter 12 bzw. des Bewehrungsmaterials 14 nur schwer möglich, wodurch die Handhabung kompliziert werden würde.

In Figur 6 ist eine weitere Ausführungsform der Blitzschutzleiterklemme 10 gezeigt. Hierbei weist der Federschenkel 26 mehrere Ausbuchtungen 38 auf, die sich in ihrer Größe unterscheiden. Bei den Ausbuchtungen 38 handelt es sich insbesondere um bogenförmige Ausbuchtungen 38, vorzugweise um teilkreisförmige Ausbuchtungen 38.

Bei der in Figur 6 gezeigten Blitzschutzleiterklemme 10 weist der Federschenkel 26 drei Ausbuchtungen 38 auf, welche entsprechend ihrer Größe angeordnet sind. Dabei befindet sich die Ausbuchtung 38 mit dem kleinsten Durchmesser an dem der Basis 18 zugewandten Ende 30 des Federschenkels 26, während die Ausbuchtung 38 mit dem größten Durchmesser in den Übergangsabschnitt 24 übergeht. Mit anderen Worten ist die größte Ausbuchtung 38 dem Übergangsabschnitt 24 zugeordnet, wohingegen die kleinste Ausbuchtung 38 der Aufnahmeöffnung 28 zugeordnet ist.

Die Größe der Ausbuchtung 38, insbesondere der Durchmesser der bogenförmigen Ausbuchtung 38, entspricht vorzugsweise verschiedenen Querschnitten, von möglichen Blitzschutz- oder Erdungsleitern 12 bzw. Bewehrungsmaterial 14.

Selbstverständlich kann der Federschenkel 26 auch mehr oder weniger Ausbuchtungen 38 aufweisen, als in Figur 6 gezeigt ist.

Außerdem können die Ausbuchtungen 38 auch anders angeordnet sein, beispielsweise so, dass die Ausbuchtung 38 mit dem kleinsten Durchmesser in den Übergangsabschnitt 24 übergeht während die Ausbuchtung 38 mit dem größten Durchmesser an dem der Basis 18 zugewandten Ende 30 des Federschenkels 26 angeordnet ist (Figur 7).

Gemäß einer nicht gezeigten Ausführungsform sind die Ausbuchtungen 38 nicht im Federschenkel 26, sondern im Halteschenkel 22 vorgesehen.

Ebenso ist es möglich, dass sowohl der Federschenkel 26 als auch der Halteschenkel 22 Ausbuchtungen 38 aufweisen, wie dies in Figur 7 gezeigt ist.

Dabei entspricht die Anzahl der Ausbuchtungen 38 im Halteschenkel 22 vorzugsweise der Anzahl der Ausbuchtungen 38 im Federschenkel 26.

Außerdem liegen sich Ausbuchtungen 38 des Halteschenkels 22 und des Federschenkels 26 gegenüber, die dieselbe Größe, insbesondere den gleichen Durchmesser, aufweisen.

Dadurch definieren die Ausbuchtungen 38 definierte Halteabschnitte, die verschiedenen Querschnitten der zu klemmenden Komponente entsprechen. Somit kann die Blitzschutzleiterklemme 10 eine größere Spanne an Querschnitten der Blitzschutz- oder Erdungsleiter 12 bzw. des Bewehrungsmaterials 14 befestigen.

In den Figuren 8A bis 8F sind verschiedene Fixierungen von Blitzschutz- oder Erdungsleitern 12 an Bewehrungsmaterial 14 gezeigt. Dabei ist zu erkennen, dass sowohl Rundleiter als auch Flachleiter mit der Blitzschutzleiterklemme 10 fixiert werden können, wobei sich die jeweiligen Leiter in ihrer Größe unterscheiden können.

Um einen Blitzschutz- oder Erdungsleiter 12 bzw. ein Bewehrungsmaterial 14 mittels der Blitzschutzleiterklemme 10 zu fixieren, wird der Blitzschutz- oder Erdungsleiter 12 bzw. das Bewehrungsmaterial 14 durch die Aufnahmeöffnung 28 in die Aufnahme 20 der jeweiligen Klemmvorrichtung 16 eingeführt. Dabei verdrängt der Blitzschutz- oder Erdungsleiter 12 bzw. das Bewehrungsmaterial 14 den Federschenkel 26 der Klemmvorrichtung 16, sodass dieser bewegt wird.

Wenn der Blitzschutz- oder Erdungsleiter 12 bzw. das Bewehrungsmaterial 14 die Aufnahme 20 erreicht hat, wird der Federschenkel 26 durch die Federvorspannkraft in Richtung seiner Ausgangsposition bewegt, sodass der Blitzschutz- oder Erdungsleiter 12 bzw. das Bewehrungsmaterial 14 in der Klemmvorrichtung 16 fixiert ist.

Dieser Vorgang wird für die zweite Klemmvorrichtung 16 wiederholt, sodass der Blitzschutz- oder Erdungsleiter 12 bzw. das Bewehrungsmaterial 14 mittels der Blitzschutzleiterklemme 10 ebenfalls fixiert wird.

Grundsätzlich wird die Bewegbarkeit des Federschenkels 26 dadurch erreicht, dass sich der daran anschließende Übergangsabschnitt 24 aufweiten bzw. gebogen werden kann, wenn der Blitzschutz- oder Erdungsleiter 12 bzw. das Bewehrungsmaterial 14 in die Aufnahme 20 eingeführt wird, wie dies insbesondere aus einem Vergleich der Figuren 8A bis 8F mit den Figuren 1A, 2A und 3A hervorgeht.

Wie bereits vorhergehend erwähnt, ist die Blitzschutzleiterklemme 10 vielseitig einsetzbar und kann neben der bevorzugten Befestigung von Blitzschutz- oder Erdungsleitern 12 an Bewehrungsmaterial 14 auch einen Blitzschutz- oder Erdungsleiter 12 an einem weiteren Blitzschutz- oder Erdungsleiter 12 fixieren sowie Bewehrungsmaterial 14 an Bewehrungsmaterial 14 befestigen.

Dabei kann das Bewehrungsmaterial 14 grundsätzlich als Blitzschutz- oder Erdungsleiter 12 fungieren, insbesondere wenn Bewehrungsmaterial 14 an Bewehrungsmaterial 14 über die Blitzschutzleiterklemme 10 fixiert wird.

Dementsprechend kann die Blitzschutzleiterklemme 10 auch Rundleiter mit gleichem Querschnitt in verschiedenen Größen (Figuren 8A und 8B), Rundleiter mit unterschiedlichen Querschnitten (Figur 8C), einen Rundleiter an einem Flachleiter (Figuren 8D und 8E) sowie Flachleiter (Figur 8F) aneinander fixieren.

Aus den Figuren 8A bis 8F geht ferner anschaulich die Funktion der Sicherungsvorsprünge 32 hervor, die die in die Aufnahmen 20 eingebrachten Komponenten, also den Blitzschutz- oder Erdungsleiter 12 bzw. das Bewehrungsmaterial 14, dort vor einem unbeabsichtigten Herausrutschen sichern. Dies gilt insbesondere für Rundleiter 13 mit einem größeren Querschnitt, wie dies in den Figuren 8B, 8C und 8E gezeigt ist. Der Rundleiter 13 kann sich entsprechend an dem Sicherungsvorsprung 32 abstützen. Zudem können die Sicherungsvorsprünge 32 zur Stabilisierung der Flachleiter 15 dienen, wie dies in den Figuren 8D bis 8F gezeigt ist.

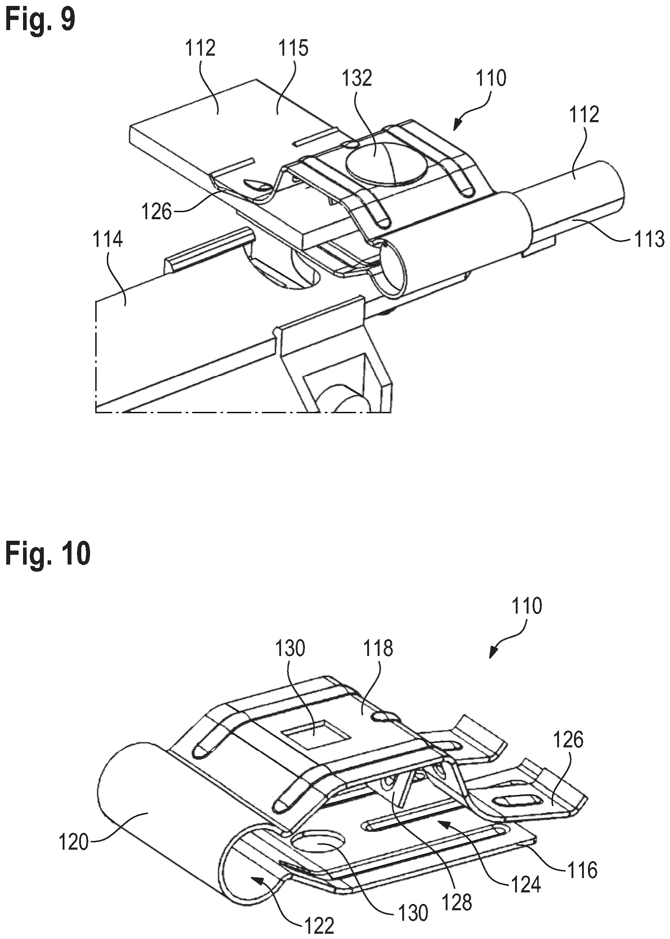

In den Figuren 9 und 10 ist eine weitere Ausführungsform der Blitzschutzleiterklemme 110 gezeigt, die zwei Blitzschutz- oder Erdungsleiter 112 an einer Potenzialausgleichsschiene 114 befestigt.

In der gezeigten Ausführungsform ist die Potenzialausgleichsschiene 114 als eine flache Schiene bzw. ein Flachleiter ausgebildet.

Die Blitzschutz- oder Erdungsleiter 112 dagegen sind einmal als Flachleiter 115 und einmal als Rundleiter 113 ausgeführt.

Die Blitzschutzleiterklemme 110 weist einen Anlageschenkel 116 auf, welcher an der Potenzialausgleichsschiene 114 anliegt.

Ein Federschenkel 118 liegt dem Anlageschenkel 116 gegenüber, wobei der Anlageschenkel 116 und der Federschenkel 118 über einen Übergangsabschnitt 120 miteinander verbunden sind.

Der Übergangsabschnitt 120 definiert dabei eine erste Aufnahme 122 für den Rundleiter 113.

Der Anlageschenkel 116 und der Federschenkel 118 bilden dagegen eine zweite Aufnahme 124 für den Flachleiter 115.

Auch diese Blitzschutzleiterklemme 110 wird vorzugsweise einstückig aus einem Federblech gefertigt, sodass zunächst die Blitzschutzleiterklemme 110 aus dem Federblech ausgestanzt und anschließend geformt wird.

Damit die erste Aufnahme 122 eine möglichst definierte Aufnahme für den Rundleiter 113 bildet, ist der Übergangsabschnitt 120 im Querschnitt teilkreisförmig ausgebildet. Für eine möglichst sichere Befestigung des Rundleiters 113 ist der Übergangsabschnitt 120 im Querschnitt insbesondere länger als ein Halbkreis ausgebildet. Hierdurch ergibt sich eine Sicherung für den Rundleiter 113, da sich der Übergangsabschnitt 120 um den Rundleiter 113 teilweise schließt.

Da die zweite Aufnahme 124 als Aufnahme für den Flachleiter 115 vorgesehen ist, weist der Federschenkel 118 einen Niederhaltabschnitt 126 auf. Dieser ist auf der vom Übergangsabschnitt 120 abgewandten Seite des Federschenkels 118 vorgesehen und in Richtung des Anlageschenkels 116 vorgespannt, sodass der Niederhaltabschnitt 126 den Flachleiter 115 auf den Anlageschenkel 116 drückt.

Somit ist durch das Vorsehen der ersten Aufnahme 122 für den Rundleiter 113 und der zweiten Aufnahme 124 für den Flachleiter 115 eine gleichzeitige Befestigung von Rund- und Flachleiter an der Potenzialausgleichsschiene 114 möglich.

Um eine sicherere Befestigung der Blitzschutz- oder Erdungsleiter 112 zu gewährleisten, weist der Federschenkel 118 vorliegend zudem einen Sicherungsvorsprung 128 auf.

Der Sicherungsvorsprung 128 erstreckt sich vorzugsweise in Richtung des Anlageschenkels 116 und ist in Richtung des Anlageschenkels 116 vorgespannt.

Wie auch bei den vorherigen Ausführungsformen, ist der Sicherungsvorsprung 128 einstückig mit dem Federschenkel 118 ausgebildet, da der Sicherungsvorsprung 128 durch ein Ausstanzen aus dem Federschenkel 118 und entsprechendes Formen ausgebildet worden ist.

Zur Befestigung der Blitzschutzleiterklemme 110 an der Potenzialausgleichsschiene 114 ist beispielsweise sowohl im Anlageschenkel 116 als auch im Federschenkel 118 eine Befestigungsöffnung 130 vorgesehen.

Die beiden Befestigungsöffnungen 130 sind dabei so angeordnet, dass sie miteinander fluchten und ein Befestigungsmittel 132 aufnehmen können. Bei dem Befestigungsmittel 132 kann es sich beispielsweise um eine Schraube handeln.

Alternativ kann die Blitzschutzleiterklemme 110 auch an die Potenzialausgleichsschiene 114 genietet oder anderweitig befestigt werden. In dem Fall kann in die Befestigungsöffnung 130 des Federschenkels 118 ein Fixiermittel eingebracht werden, um den Flachleiter 115 in der Blitzschutzleiterklemme 110 zusätzlich zu fixieren und so zu sichern.

Zudem kann die Blitzschutzleiterklemme 110 dabei drehbar, insbesondere um 360° drehbar, an der Potenzialausgleichsschiene 114 befestigt sein. Somit kann neben einer parallelen Fixierung sowohl eine senkrechte als auch windschiefe Fixierung realisiert werden.

Zum Befestigen des Rundleiters 113 und des Flachleiters 115 an der Potentialausgleichsschiene 114 mittels der Blitzschutzleiterklemme 110 wird zunächst der Rundleiter 113 in die Blitzschutzleiterklemme 110 eingeführt. Dabei verdrängt der Rundleiter 113 den Federschenkel 118, sodass dieser bewegt wird. Der Rundleiter 113 wird so weit in die Blitzschutzleiterklemme 110 eingeführt, bis dieser die erste Aufnahme erreicht 122 hat.

Anschließend wird der Flachleiter 115 in die Blitzschutzleiterklemme 110 eingeführt, wobei dieser wie auch der Rundleiter 113 den Federschenkel 118 verdrängt. Der Federschenkel 118 wird durch die Federvorspannkraft in Richtung seiner Ausgangsposition zurückbewegt, sodass der Flachleiter 115, insbesondere durch den Niederhaltabschnitt 126, gegen den Anlageschenkel 116 gedrückt wird.

Die Blitzschutzleiterklemme 110 wird dann auf der Potentialausgleichsschiene 114 positioniert, sodass die Befestigungsöffnungen 130 mit einer Öffnung bzw. Bohrung in der Potentialausgleichsschiene 114 fluchten, sodass das Befestigungsmittel 132 durch die Befestigungsöffnungen 130 in die Öffnung bzw. Bohrung der Potentialausgleichsschiene 114 eingeführt und hiermit befestigt werden kann.

Selbstverständlich ist es auch denkbar, dass lediglich ein Blitzschutz-oder Erdungsleiter 112, der als Flachleiter 115 oder Rundleiter 113 ausgeführt ist, mittels der Blitzschutzleiterklemme 110 an der Potentialausgleichsschiene 114 befestigt wird.

Grundsätzlich sind die unterschiedlichen Merkmalsgruppen der einzelnen Ausführungsformen der Blitzschutzleiterklemme 10, 110 untereinander beliebig kombinierbar.

## Patentansprüche

1. Blitzschutzleiterklemme (10) zur Fixierung von einem Blitzschutz- oder Erdungsleiter (12) an einem Bewehrungsmaterial (14), mit
zwei Klemmvorrichtungen (16), die jeweils eine Basis (18) aufweisen, über die die beiden Klemmvorrichtungen (16) in einer Verbindungsebene (E) miteinander verbunden sind,
wobei die Klemmvorrichtungen (16) jeweils eine Aufnahme (20) aufweisen, die durch einen Halteschenkel (22), einen Übergangsabschnitt (24) und einen Federschenkel (26) gebildet ist,
wobei die Aufnahmen (20) jeweils eine Aufnahmeöffnung (28) aufweisen, die durch den jeweiligen Halteschenkel (22) und den Federschenkel (26) begrenzt ist, und
wobei die Aufnahmeöffnungen (28) jeweils zur Verbindungsebene (E) weisen.

2. Blitzschutzleiterklemme (10) nach Anspruch 1, **dadurch gekennzeichnet, dass** die beiden Klemmvorrichtungen (16) zwei separate Bauteile sind, die jeweils baugleich ausgebildet sind, wobei die beiden Klemmvorrichtungen (16) so miteinander verbunden sind, dass die Blitzschutzleiterklemme (10) symmetrisch ausgebildet ist.

3. Blitzschutzleiterklemme (10) nach einem der Ansprüche 1 oder 2, **dadurch gekennzeichnet, dass** der Halteschenkel (22) und/oder der Federschenkel (26) wenigstens einen Sicherungsvorsprung (32) aufweisen bzw. aufweist, der in Richtung Aufnahme (20) weist, insbesondere wobei der Sicherungsvorsprung (32) durch Ausstanzen aus dem Halteschenkel (22) und/oder dem Federschenkel (26) gebildet ist.

4. Blitzschutzleiterklemme (10) nach einem der vorhergehenden Ansprüche, **dadurch gekennzeichnet, dass** die beiden Klemmvorrichtungen (16) mittels eines Drehgelenks (34) miteinander verbunden sind, sodass die beiden Klemmvorrichtungen (16) zueinander verdrehbar sind.

5. Blitzschutzleiterklemme (10) nach einem der vorhergehenden Ansprüche, **dadurch gekennzeichnet, dass** der Halteschenkel (22) und/oder der Federschenkel (26) wenigstens zwei Ausbuchtungen (38), insbesondere bogenförmige Ausbuchtungen (38), aufweisen bzw. aufweist, wobei die Größe von benachbarten Ausbuchtungen (38) unterschiedlich ist.

6. Blitzschutzleiterklemme (10) nach Anspruch 5, **dadurch gekennzeichnet, dass** der Halteschenkel (22) und der Federschenkel (26) jeweils wenigstens zwei Ausbuchtungen (38) aufweisen, wobei die Größe der Ausbuchtungen (38) des Halteschenkels (22) der Größe der Ausbuchtungen (38) des Federschenkels (26) entsprechen, und wobei die Ausbuchtungen (38) mit derselben Größe einander gegenüberliegen.

7. Blitzschutzleiterklemme (10) nach einem der vorhergehenden Ansprüche, **dadurch gekennzeichnet, dass** die Klemmvorrichtung (16) einen Einschubhilfeabschnitt (36) aufweist, der sich zwischen der Basis (18) und dem Halteschenkel (22) erstreckt, insbesondere wobei der Einschubhilfeabschnitt (36) um einen Winkel zwischen 10° und 80° zur Basis (18) geneigt ist.

8. Blitzschutzleiterklemme (10) nach einem der vorhergehenden Ansprüche, **dadurch gekennzeichnet, dass** der Federschenkel (26) wenigstens halb so lang wie der Halteschenkel (22) ist, insbesondere wobei die Länge des Federschenkels (26) wenigstens zwei Dritteln der Länge des Halteschenkels (22) entspricht.

9. Blitzschutzleiterklemme (10) nach einem der vorhergehenden Ansprüche, **dadurch gekennzeichnet, dass** die wenigstens zwei Klemmvorrichtungen (16) jeweils einstückig aus einem Federblech ausgebildet sind.

10. Blitzschutzleiterklemme (10) nach einem der vorhergehenden Ansprüche, **dadurch gekennzeichnet, dass** der Halteschenkel (22) und der Federschenkel (26) jeweils geradlinig ausgebildet sind, wohingegen der Übergangsabschnitt (24) gekrümmt ausgebildet ist, insbesondere C- oder U-förmig.

11. Blitzschutzleiterklemme (110) zur Befestigung von wenigstens einem Blitzschutz- oder Erdungsleiter (112) an einer Potentialausgleichsschiene (114), mit
einem Anlageschenkel (116) zur Anlage an der Potentialausgleichsschiene (114),
einem dem Anlageschenkel (116) gegenüberliegenden Federschenkel (118),
wobei der Anlageschenkel (116) und der Federschenkel (118) über einen Übergangsabschnitt (120) miteinander verbunden sind, und wobei der Übergangsabschnitt (120) eine erste Aufnahme (122) für einen Rundleiter (113) ausbildet, und
wobei der Anlageschenkel (116) und der Federschenkel (118) eine zweite Aufnahme (124) für einen Flachleiter (115) ausbilden.

12. Blitzschutzleiterklemme (110) nach Anspruch 11, **dadurch gekennzeichnet, dass** der Federschenkel (118) einen Niederhaltabschnitt (126) aufweist, welcher an einer vom Übergangsabschnitt (120) abgewandten Seite des Federschenkels (118) vorgesehen ist, und wobei der Niederhaltabschnitt (126) in Richtung des Anlageschenkels (116) vorgespannt ist.

13. Blitzschutzleiterklemme (110) nach einem der Ansprüche 11 oder 12, **dadurch gekennzeichnet, dass** der Federschenkel (118) einen Sicherungsvorsprung (128) aufweist.

14. Blitzschutzleiterklemme (110) nach einem der Ansprüche 11 bis 13, **dadurch gekennzeichnet, dass** in dem Anlageschenkel (116) und in dem Federschenkel (118) jeweils eine Befestigungsöffnung (130) vorgesehen ist, wobei die Befestigungsöffnungen (130) miteinander fluchten und eingerichtet sind, ein Befestigungsmittel (132) aufzunehmen, womit die Blitzschutzleiterklemme (110) an der Potentialausgleichsschiene (114) befestigbar ist.

15. Blitzschutzleiterklemme (110) nach einem der Ansprüche 11 bis 14, **dadurch gekennzeichnet, dass** der Übergangsabschnitt (120) im Querschnitt teilkreisförmig ausgebildet ist, und wobei der Übergangsabschnitt (120) im Querschnitt länger als ein Halbkreis ausgebildet ist.

## Geänderte Patentansprüche

### Geänderte Patentansprüche gemäss Regel 137(2) EPÜ.

1. Blitzschutzleiterklemme (10) zur Fixierung von einem Blitzschutz- oder Erdungsleiter (12) an einem Bewehrungsmaterial (14), mit
zwei Klemmvorrichtungen (16), die jeweils eine Basis (18) aufweisen, über die die beiden Klemmvorrichtungen (16) in einer Verbindungsebene (E) miteinander verbunden sind, wobei die Rückseiten der Basen (18) der beiden Klemmvorrichtungen (16), über die die Basen (18) miteinander verbunden sind, in der Verbindungsebene (E) aneinander anliegen,
wobei die Klemmvorrichtungen (16) jeweils eine Aufnahme (20) aufweisen, die durch einen Halteschenkel (22), einen Übergangsabschnitt (24) und einen Federschenkel (26) gebildet ist,
wobei die Aufnahmen (20) jeweils eine Aufnahmeöffnung (28) aufweisen, die durch den jeweiligen Halteschenkel (22) und den Federschenkel (26) begrenzt ist, und
wobei die Aufnahmeöffnungen (28) jeweils zur Verbindungsebene (E) weisen.

2. Blitzschutzleiterklemme (10) nach Anspruch 1, **dadurch gekennzeichnet, dass** die beiden Klemmvorrichtungen (16) zwei separate Bauteile sind, die jeweils baugleich ausgebildet sind, wobei die beiden Klemmvorrichtungen (16) so miteinander verbunden sind, dass die Blitzschutzleiterklemme (10) symmetrisch ausgebildet ist.

3. Blitzschutzleiterklemme (10) nach einem der Ansprüche 1 oder 2, **dadurch gekennzeichnet, dass** der Halteschenkel (22) und/oder der Federschenkel (26) wenigstens einen Sicherungsvorsprung (32) aufweisen bzw. aufweist, der in Richtung Aufnahme (20) weist, insbesondere wobei der Sicherungsvorsprung (32) durch Ausstanzen aus dem Halteschenkel (22) und/oder dem Federschenkel (26) gebildet ist.

4. Blitzschutzleiterklemme (10) nach einem der vorhergehenden Ansprüche, **dadurch gekennzeichnet, dass** die beiden Klemmvorrichtungen (16) mittels eines Drehgelenks (34) miteinander verbunden sind, sodass die beiden Klemmvorrichtungen (16) zueinander verdrehbar sind.

5. Blitzschutzleiterklemme (10) nach einem der vorhergehenden Ansprüche, **dadurch gekennzeichnet, dass** der Halteschenkel (22) und/oder der Federschenkel (26) wenigstens zwei Ausbuchtungen (38), insbesondere bogenförmige Ausbuchtungen (38), aufweisen bzw. aufweist, wobei die Größe von benachbarten Ausbuchtungen (38) unterschiedlich ist.

6. Blitzschutzleiterklemme (10) nach Anspruch 5, **dadurch gekennzeichnet, dass** der Halteschenkel (22) und der Federschenkel (26) jeweils wenigstens zwei Ausbuchtungen (38) aufweisen, wobei die Größe der Ausbuchtungen (38) des Halteschenkels (22) der Größe der Ausbuchtungen (38) des Federschenkels (26) entsprechen, und wobei die Ausbuchtungen (38) mit derselben Größe einander gegenüberliegen.

7. Blitzschutzleiterklemme (10) nach einem der vorhergehenden Ansprüche, **dadurch gekennzeichnet, dass** die Klemmvorrichtung (16) einen Einschubhilfeabschnitt (36) aufweist, der sich zwischen der Basis (18) und dem Halteschenkel (22) erstreckt, insbesondere wobei der Einschubhilfeabschnitt (36) um einen Winkel zwischen 10° und 80° zur Basis (18) geneigt ist.

8. Blitzschutzleiterklemme (10) nach einem der vorhergehenden Ansprüche, **dadurch gekennzeichnet, dass** der Federschenkel (26) wenigstens halb so lang wie der Halteschenkel (22) ist, insbesondere wobei die Länge des Federschenkels (26) wenigstens zwei Dritteln der Länge des Halteschenkels (22) entspricht.

9. Blitzschutzleiterklemme (10) nach einem der vorhergehenden Ansprüche, **dadurch gekennzeichnet, dass** die wenigstens zwei Klemmvorrichtungen (16) jeweils einstückig aus einem Federblech ausgebildet sind.

10. Blitzschutzleiterklemme (10) nach einem der vorhergehenden Ansprüche, **dadurch gekennzeichnet, dass** der Halteschenkel (22) und der Federschenkel (26) jeweils geradlinig ausgebildet sind, wohingegen der Übergangsabschnitt (24) gekrümmt ausgebildet ist, insbesondere C- oder U-förmig.
